# EUROPEAN PATENT SPECIFICATION

(11) **EP 0 802 615 B1**
(45) Date of publication and mention of the grant of the patent: **01.10.2003**
(21) Application number: 97110563.0
(22) Date of filing: 25.01.1995
(51) Int. Cl.: H02M 1/12, H02M 3/335

(54) **Switching power source apparatus**
Schaltnetzteil
Alimentation de puissance à découpage

(30) Priority: 28.01.1994 JP 800994; 07.02.1994 JP 1303994; 07.02.1994 JP 1304094
(43) Date of publication of application: 22.10.1997
(62) Divisional of application: 95100975.2
(73) Proprietor: MATSUSHITA ELECTRIC INDUSTRIAL CO., LTD., Kadoma-shi, Osaka 571-0050 (JP); SHINDENGEN ELECTRIC MANUFACTURING COMPANY, LIMITED, Hanno-shi, Saitama-ken 357 (JP)
(72) Inventor: Ishii, Takuya, Suita-shi, Osaka 564 (JP); Watanabe, Haruo, Hidaka-shi, Saitama 350-12 (JP); Kobayashi, Yoshinori, Hanno-shi, Saitama 357 (JP); Sekine,Yutaka, Saitama 358 (JP)
(74) Representative: Grünecker, Kinkeldey, Stockmair & Schwanhäusser Anwaltssozietät

(56) References cited:
- WO-A-92/02983
- PATENT ABSTRACTS OF JAPAN vol. 007, no. 255 (E-210), 12 November 1983 & JP 58 141680 A (MATSUSHITA DENKI SANGYO KK), 23 August 1983,

## Description

### Background of the Invention:

### 1.Industrial Field of Utilization

The present invention relates to a switching power source apparatus which receives alternating current such as commercial alternating-current power source as input.

### 2.Related Art of the Invention

The switching power source apparatus is widely used recently as a power source circuit for various electronic appliances owing to its efficient power transforming characteristic. In most of such circuits, however, since the input rectifying circuit of capacitor input type is used, the power factor is poor, and harmonic currents contained in the input current may cause troubles in other electronic appliances.

A conventional switching power source apparatus is described below.

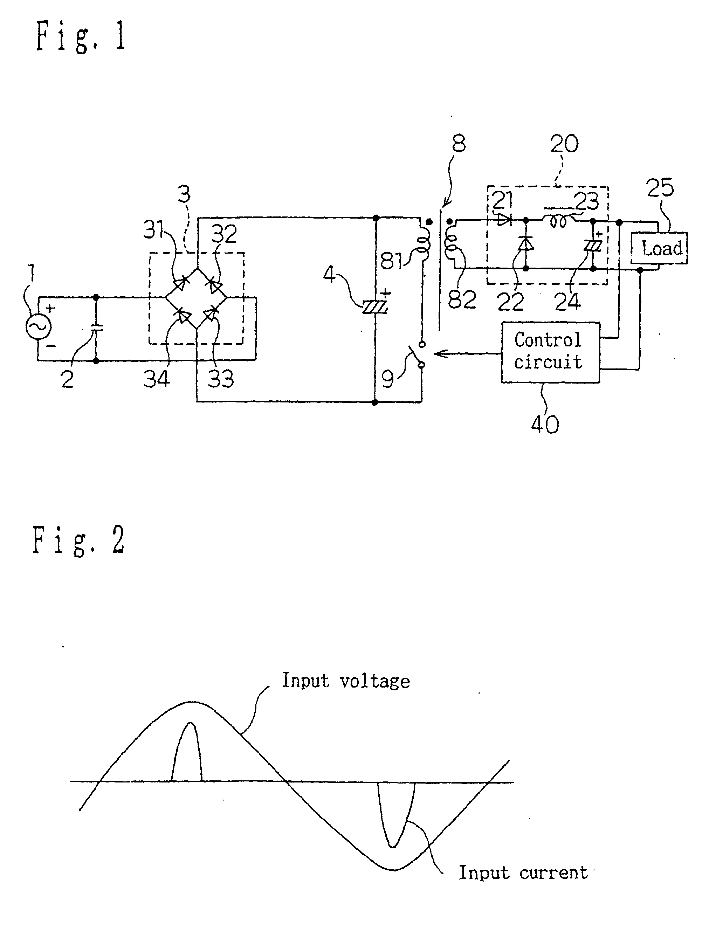

Fig. 1 shows a circuit construction of a conventional switching power source apparatus. In Fig. 1 , reference numeral 1 denotes an input alternating-current power source, and 2 is an input filter capacitor, which is connected to both ends of the input alternating-current power source 1. Reference numeral 3 denotes a full-wave rectifying circuit, which is composed of diodes 31 to 34. Reference numeral 4 is a smoothing capacitor, and an input rectifying circuit of capacitor input type which rectifies and smoothes the alternating-current input voltage of the input alternating-current power source 1 is constituted with the full-wave rectifying circuit 3 and smoothing capacitor 4. Reference numeral 8 represents a transformer, which possesses a primary winding 81 and a secondary winding 82. Reference numeral 9 is a switch element, and a series circuit of the primary winding 81 and switch element 9 is connected to both ends of the smoothing capacitor 4. Reference numeral 20 is a rectifying and smoothing circuit, composed of diodes 21, 22, a choke coil 23, and a capacitor 24, which rectifies and smoothes the voltage generated in the secondary winding 82 by on/off action of the switch element 9, and supplies an output direct-current voltage to a load 25. Reference numeral 40 is a control circuit, which controls the on/off ratio of the switch element 9 so as to stabilize the output direct-current voltage supplied to the load 25.

In thus constituted switching power source apparatus, an input waveform is shown in Fig. 2 . For a sinusoidal alternating-current input voltage, the full-wave rectifying circuit 3 conducts at only near its peak value, and the charging current to the smoothing capacitor 4 is concentrated, so that the input current waveform has a peak form short in the conduction period.

In such conventional constitution, however, the power factor is poor, and its input current contains lots of harmonic currents, which may cause troubles to other electronic appliances.

### SUMMARY OF THE INVENTION

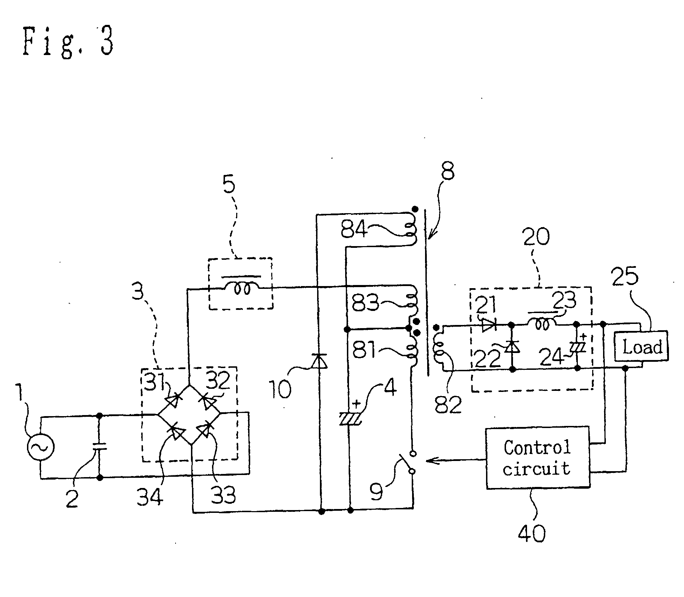

The present inventors devised a switching power source apparatus as shown in Fig. 3 Herein, the parts having the same actions as in Fig. 1 are identified with same reference numerals. In Fig. 3 , reference numeral 1 is an input alternating-current power source, and 2 is an input filter capacitor, which is connected to both ends of the input alternating-current power source 1. Reference numeral 3 denotes a full-wave rectifying circuit, composed of diodes 31 to 34. Reference numeral 4 is a smoothing capacitor, and 5 is a choke coil, and one end of the choke coil 5 is connected to the positive electrode output end of the full-wave rectifying circuit 3. Reference numeral 8 represents a transformer, which comprises a primary winding 81, a secondary winding 82, a tertiary winding 83 connected to the other end of the choke coil 5, and a quaternary winding 84. A reference numeral 9 is a switch element, and a series circuit of the primary winding 81 and the switch element 9 is connected to both ends of the smoothing capacitor 4. Reference numeral 10 is a diode, and its series circuit with the quaternary winding 84 is connected to both ends of the smoothing capacitor 4. Reference numeral 20 is a rectifying and smoothing circuit, composed of diodes 21, 22, a choke coil 23, and a capacitor 24, which rectifies and smoothes the voltage generated in the secondary winding 82 by on/off action of the switch element 9, and supplies an output direct-current voltage to a load 25. Reference numeral 40 denotes a control circuit, which controls the on/off ratio of the switch element 9 so as to stabilize the output direct-current voltage supplied to the load 25. Supposing the voltage of the input alternating-current power source 1 to be Vi, the voltage of the smoothing capacitor to be Ec, the number of turns of the primary winding 81 to be N1, the number of turns of the tertiary winding 83 to be N3, their ratio of number of turns to be N = N3/N1, the number of turns of the quaternary winding 84 to be N4, and N4=N1, the operation is described below.

First, while the input alternating-current power source 1 is in the period of the polarity as shown in Fig. 3 , when the switch element 9 is turned on, a voltage of N-Ec is generated in the tertiary winding 83. When the voltage Vi of the input alternating-current power source 1 is greater than (1-N)Ec, the diodes 31 and 33 conduct, and the current flows in the route of input alternating-current power source 1 → diode 31 → choke coil 5 → tertiary winding 83 → primary winding 81 → switch element 9 → diode 33 → input alternating-current power source 1, or input alternating-current power source 1 → diode 31 → choke coil 5 → tertiary winding 83 → smoothing capacitor 4 → diode 33 → input alternating-current power source 1. In the choke coil 5, Vi-(1-N)Ec is applied, and this current increases linearly at an inclination proportional to Vi-(1-N)Ec.

When the switch element 9 is turned off, the current flows in the route of input alternating-current power source 1 → diode 31 → choke coil 5 → tertiary winding 83 → smoothing capacitor 4 → diode 33 → input alternating-current power source 1. In the choke coil 5, Vi-(1+N)Ec is applied, and this current decreases linearly and soon becomes zero.

When the polarity of the input alternating-current power source 1 is inverted from the state in Fig. 3 , the diode 32 acts instead of the diode 31, and the diode 34, instead of the diode 33.

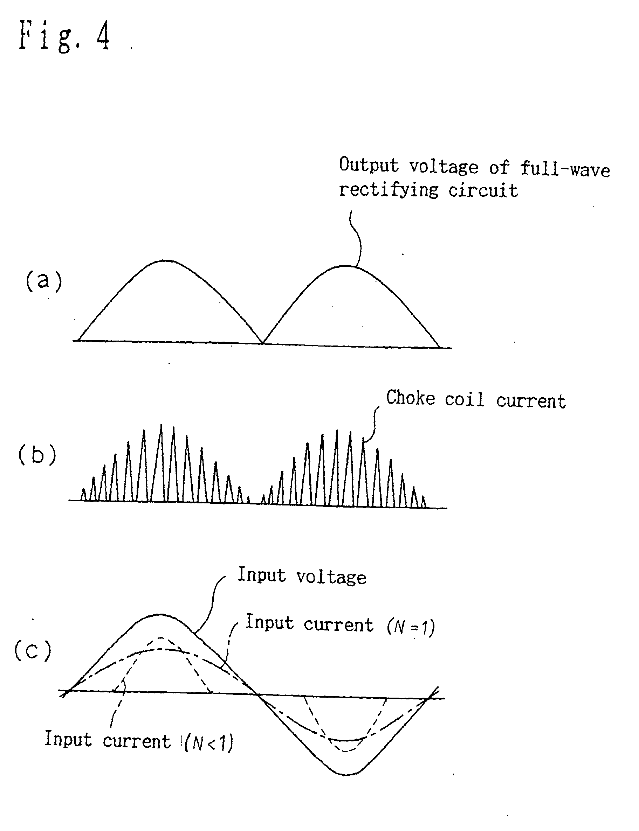

In the above operation, when N=1, the operation waveforms of the parts are shown in Fig. 4. In Fig. 4 , (a) denotes an output voltage waveform of the full-wave rectifying circuit 3, (b) is a current waveform flowing in the choke coil 5, and (c) is an input current waveform. The current flowing in the choke coil 5 is a sawtooth waveform having a peak value proportional to the voltage of the input alternating-current power source 1. It is smoothed by the filter capacitor 2 to produce an input current waveform, which is a sinusoidal waveform approximately proportional to the input alternating-current voltage. Incidentally, in the case of N < 1, the full-wave rectifying circuit 3 does not conduct when Vi-(1-N)Ec < 0, and the input current waveform becomes as shown by broken line in the diagram.

## Claims

1. A switching power source appartus comprising:
a full-wave rectifying circuit (3)for rectifying an input alternating-current power source,
a series circuit of a primary winding (81) of a transformer (8) and a switch element (9),
a smoothing capacitor (4)which is connected to said series circuit and whose connection point (A) to said switch (9)is connected to an output terminal of said full-wave rectifying (3) circuit,
a choke coil(5) which is connected to said primary winding (81)and said smoothing capacitor (4)and another output terminal of said full-wave rectifying circuit(3), via a tertiary winding(83) on which a part of a voltage of said primary winding (81)is generated,
a rectifying and smoothing circuit (20) for rectifying and smoothing an output of a secondary winding(82) of said transformer (8) ,thereby to supply direct-current voltage to a load (25), and
a control circuit(40) for controlling an on/off ratio of the switch element (9) so as to stabilize the direct-current voltage outputted from said rectifying and smoothing circuit (20).

## Patentansprüche

1. Schaltnetzteil, das umfasst:
eine Vollweg-Gleichrichtungsschaltung (3), die eine Eingangs-Wechselstromquelle gleichrichtet,
eine Reihenschaltung aus einer Primärwicklung (81) eines Transformators (8) und einem Schalterelement (9),
einen Glättungskondensator (4), der mit der Reihenschaltung verbunden ist, und dessen Verbindungspunkt (A) zu dem Schalter (9) mit einem Ausgangsanschluss der Vollweg-Gleichrichtungsschaltung (3) verbunden ist,
eine Drosselspule (5), die mit der Primärwicklung (81) und dem Glättungskondensator (4) und einem anderen Ausgangsanschluss der Vollweg-Gleichrichtungsschaltung (3) über eine Tertiärwicklung (83), auf der ein Teil einer Spannung der Primärwicklung (81) erzeugt wird, verbunden ist,
eine Gleichrichtungs- und Glättungsschaltung (20), die einen Ausgang einer Sekundärwicklung (82) des Transformators (8) gleichrichtet und glättet, um dadurch eine Gleichstromspannung an eine Last (25) zu liefern, und
eine Steuerschaltung (40), die ein Ein/Aus-Verhältnis des Schalterelements (9) so steuert, dass die von der Gleichrichtungs- und Glättungsschaltung (20) ausgegebene Gleichstromspannung stabilisiert wird.

## Revendications

1. Dispositif de source d'alimentation à découpage comprenant :
un circuit de redressement à deux alternances (3) destiné à redresser une source d'alimentation en courant alternatif d'entrée,
un circuit série constitué d'un enroulement primaire (81) d'un transformateur (8) et d'un élément de commutateur (9),
un condensateur de lissage (4) qui est relié audit circuit série et dont le point de connexion (A) audit commutateur (9) est relié à une borne de sortie dudit circuit de redressement à deux alternances (3),
une bobine d'arrêt (5) qui est reliée audit enroulement primaire (81) et audit condensateur de lissage (4) et à une autre borne de sortie dudit circuit de redressement à deux alternances (3), par l'intermédiaire d'un enroulement tertiaire (83) sur lequel une partie d'une tension dudit enroulement primaire (81) est générée,
un circuit de redressement et de lissage (20) destiné à redresser et à lisser une sortie d'un enroulement secondaire (82) dudit transformateur (8), pour fournir ainsi une tension en courant continu à une charge (25), et
un circuit de commande (40) destiné à commander un rapport d'état conducteur/bloqué de l'élément de commutateur (9) de façon à stabiliser la tension en courant continu fournie en sortie depuis ledit circuit de redressement et de lissage (20).
